# EUROPEAN PATENT APPLICATION

(11) **EP 2 955 635 A1**
(43) Date of publication of application: **16.12.2015**
(21) Application number: 13874444.6
(22) Date of filing: 05.02.2013
(51) Int. Cl.: G06F 13/00

(54) **INFORMATION PROVIDING SERVICE PROGRAM, INFORMATION PROVIDING SERVICE METHOD, INFORMATION PROVIDING SERVICE DEVICE, AND INFORMATION PROVIDING SERVICE SYSTEM**

(71) Applicant: Fujitsu Limited, Kawasaki-shi, Kanagawa 211-8588 (JP)
(72) Inventor: OKABAYASHI Miwa, Kawasaki-shi Kanagawa 211-8588 (JP)
(74) Representative: Schultes, Stephan
(86) International application number: PCT/JP2013/052618
(87) International publication number: WO 2014/122730

(57) **Abstract**

A non-transitory computer readable storage medium storing therein a program for causing a computer to execute a process, the process includes receiving, by a server, a position information from a mobile terminal device, and sending, by the server, contents of domain corresponding to the position information to the mobile terminal device, and wherein the sending further includes second sending, by the server, when the position information corresponds to an offline preparation domain which locates a circumstance of an offline domain of which a communication with the mobile terminal device is in an offline state, the contents of the offline domain corresponding to the offline preparation domain.

## Description

### TECHNICAL FIELD

The embodiments discussed herein relate to information provision service program, information provision service method, information provision service device and information provision service system.

### BACKGROUND ART

In late years, in an exhibition hall or a museum, etc., system using a terminal which displays contents depending on a position of a user is proposed. In addition, in a hospital or a factory, etc., the system using the terminal, which displays position administration according to the position of the staff having a terminal and the duties instructions based on the position, is proposed.

In such a terminal, it is difficult to hold all the contents corresponding to all positions beforehand in the terminal, because of resource restrictions of the terminal. Therefore, the terminal receives the contents depending to the position from a server one by one. For example, the system is constituted by a plurality of terminals which is able to communicate with a server, and the contents corresponding to each place are memorized to the server. And the server transmits contents and the duties instructions corresponding to the position to the terminal depending on the position that the server received from the terminal.

### CITATION LIST

### PATENT LITERATURE

[patent literature 1] Japanese Laid-Open Patent Publication No. 2011-55,053.

### SUMMARY OF INVENTION

### PROBLEM TO BE SOLVED BY THE INVENTION

However, in a such system, during an offline state that the terminal device is unable to communicate with the server, it is difficult that the server obtains the position of the terminal device, thereby the server is unable to send contents (for example, patent literature 1). Therefore, it is difficult that the terminal device provides the service in a user.

Especially, when the user moves with the terminal device, the terminal device may not be always in state to be able to communicate. Therefore, the communication disconnection occurs by a reason such as being far from the access point of the wireless communication. In addition, it is not easy to measure an electric wave state of all places beforehand, and to detect the place which is in an offline state, and to deal with the detection. In addition, it is not easy to maintain communication environment so that all places become the online state.

Therefore, this invention provides information provision service program, information provision service method, information provision service device and information provision service system which provide the service even if in an offline state.

### MEANS FOR SOLVING THE PROBLEMS

According to a first aspect of the embodiment, a non-transitory computer readable storage medium storing therein a program for causing a computer to execute a process, the process includes receiving, by a server, a position information from a mobile terminal device, and sending, by the server, contents of domain corresponding to the position information to the mobile terminal device, and wherein the sending further includes second sending, by the server, when the position information corresponds to an offline preparation domain which locates a circumstance of an offline domain of which a communication with the mobile terminal device is in an offline state, the contents of the offline domain corresponding to the offline preparation domain.

### ADVANTAGEOUS EFFECT OF THE INVENTION

According to the first aspect, it is possible to provide the service even if in an offline state.

### BRIEF DESCRIPTION OF DRAWINGS

FIG 1 is a diagram expressing an example of an outline of the information provision service system.
FIG 2 is a diagram expressing an example of an outline of the information provision service system according to the embodiment.
FIG 3 is a diagram indicating an example of the hardware constitution of the server 100 and the mobile terminal device 200 constituting the information provision service system according to the embodiment.
FIG. 4A ∼ 4D are diagrams indicating an example of the data constitution of each database DB which is stored to the server 100 and the mobile terminal device 200.
FIG 5 is a flow chart diagram explaining the transmission process of data in the mobile terminal device 200.
FIG. 6A and FIG. 6B are flow chart diagrams explaining processing at the time of the data reception in mobile terminal device 200.
FIG 7 is a flow chart diagram explaining processing at the time of the data reception in the server 100.
FIG 8 is a flow chart diagram explaining the generation process of the offline domain DE and the offline preparation domain EE in the server 100.
FIG. 9A - FIG. 9C are diagrams explaining a specific example of the generation process of the offline domain DE.
FIG 10 is a diagram explaining a specific example of the generation process of the offline preparation domain EE.

### DESCRIPTION OF EMBODIMENTS

An embodiment of the present invention will be described below with reference to the drawings. It is to be noted that the technical scope of the present invention is not limited to the embodiment, and includes matters described in the claims and their equivalents.

### [constitution of information provision service system]

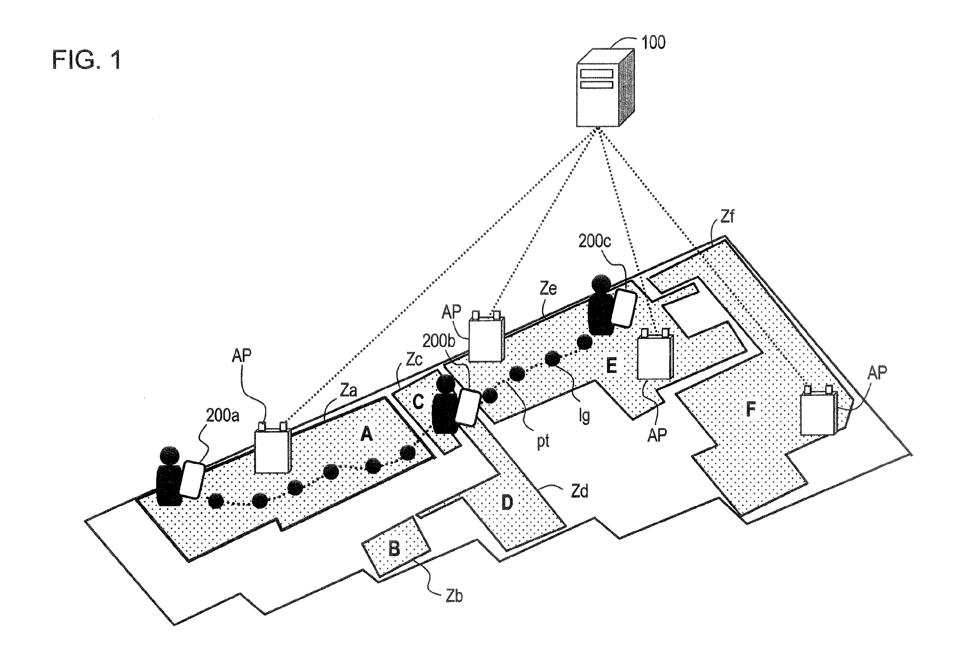

FIG 1 is a diagram expressing an example of an outline of the information provision service system. In FIG. 1, the information provision service system has mobile terminal devices 200a, 200b, 200c (following, described as mark "200") which are the mobile information devices such as one or more smart phones, and a server 100 such as a cloud data center. In addition, the terminal devices 200 and the server 100 are constructed to communicate with each other through a network. In addition, in the FIG. 1, dotted lines "pt" indicates to a trace in which the mobile terminal devices 200a and 200b moved and black dot "Ig" on the trace indicates to a measurement point of the position in the mobile terminal device 200.

The information provision service, for example, is inputted position information of the mobile terminal device 200, delivers contents depending on the position information to the mobile terminal device 200, and lets the display screen in the mobile terminal device 200 output it. For example, the information provision service is offered in the space such as an exhibition or the art museum. In this case, for example, it is possible that the user receives an offer of the information such as showpieces based on the contents according to the position in the exhibition and the art museum. Or the information provision service is offered in the space such as a hospital or the factory. In this case, for example, it is possible that the user receives duties instructions through the contents according to the position in the hospital and the factory.

A space depicted by FIG. 1, for example, has places A - F (Za, Zb, Zc, Zd, Ze, Zf). The mobile terminal device 200 receives only the content of the places A - F corresponding to the position from the server 100 one by one. In this example, the mobile terminal device 200a receives contents corresponding to the place AZa, the mobile terminal device 200b receives contents corresponding to the place CZc, and the mobile terminal device 200c receives contents corresponding to the place EZe, from the server, and provides it to the user. Thereby, the capacity of contents which memorizes in a reservation domain in the mobile terminal device 200 is reduced. However, according to this method, it is impossible that the mobile terminal device 200 provides service in a user when the mobile terminal device 200 and the server 100 are in an offline state, because it is impossible to receive the contents from the server 100.

Therefore, according to the information provision service program in the embodiment, the information provision service process has a process that the server 100 receives the position information of the terminal device 200, a process that the server 100 sends the contents of the domain corresponding to the position information to the mobile terminal device 200 when the position information indicates to an online domain in which the server 100 connects to the terminal device 200, and a process that the server 100 sends the contents of an offline domain corresponding to an offline preparation domain to the mobile terminal device 200 when the position information indicates to the offline preparation domain around the offline domain in which the server 100 does not connect to the terminal device 200.

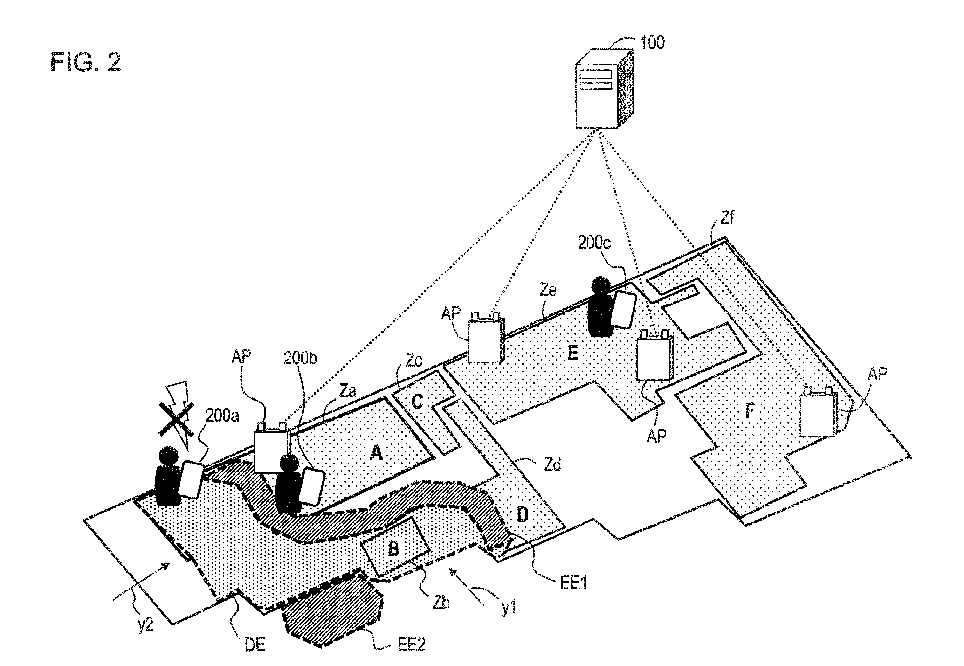

FIG 2 is a diagram expressing an example of an outline of the information provision service system according to the embodiment. In the FIG. 2, the domain which is surrounded in a dashed line and is expressed at a halftone dot indicates to the offline domain DE, and the domain which is surrounded in a dashed line and is expressed with a slanted line indicates the offline preparation domains EE1, EE2. In the FIG. 2, the mobile terminal device 200a located in the offline domain DE is that the communication with the server 100 is in an offline state. On the other hand, the mobile terminal devices 200b, 200c located in the offline preparations domain EE1, EE2 and in other domain, is that the communication with the server 100 is in an online state. Here, the offline domain DE and the offline preparations domain EE1, EE2 according to the embodiment will be explained.

### [offline domain]

The offline domain DE is the domain where communication with the mobile terminal device 200 and the server 100 is in an offline state, because the communication environment is bad, for example, access point AP of the wireless LAN does not exist. In an example of FIG 2, the mobile terminal device 200a is located in the offline domain DE. In this location, it is impossible that the mobile terminal device 200 sends current the position information to the server 100, and receives contents corresponding to the place A from the server 100. In addition, according to the embodiment, the offline domain DE is generated based on a set of the position information that was in the offline state in succession based on a history of the position information of the terminal device 200 in the offline state.

### [offline preparations domain]

The offline preparation domains EE1, EE2 are the domains which are, for example, located near the offline domain DE and are the domain that mobile terminal device 200 passes before and after the offline domain DE. In the embodiment, the offline preparations domain EE1, EE2 are generated based on the position information of one or more mobile terminal devices and the communication state history. According to the embodiment, when the mobile terminal device 200 is located in the offline preparations domain EE, the server 100 delivers the contents of the place which overlaps with the offline domain DE corresponding to offline preparations domain EE, to the mobile terminal device 200 in advance. And the mobile terminal device continues information provision service when the mobile terminal device 200 is in the offline state by providing the contents which is delivered in advance even if it is an offline state.

In this way, the server 100 according to the embodiment sends only the contents according to the position of the mobile terminal device 200 to the mobile terminal device 200 beforehand, when a needed possibility is high. In other words, the server 100 detects that the mobile terminal device 200 is located in the place where the mobile terminal device 200 has a high possibility to be in the offline state soon and delivers the contents of the domain which is in an offline state in advance before the mobile terminal device 200 is in the offline state. Thereby, it is possible that the mobile terminal device 200 provides contents when the mobile terminal device turns into the offline state. Because only needed contents are delivered to the mobile terminal device 200 in advance in a necessary timing, it is possible to save the capacity of contents stored in the mobile terminal device 200 and to reduce the communication fee.

In addition, according to the embodiment, the offline preparation domains EE1, EE2 are generated around the border where the mobile terminal device is able to go in and out of among borders which are indicated by the dotted line of the offline domain DE. In the example of FIG. 2, the offline preparation domains EE1, EE2 are generated around a doorway of the offline domain DE. In addition, in the example of FIG. 2, the borders y1, y2 of the offline domain DE, in which the offline preparations domain EE is not generated, indicates to the borders such as the walls where the mobile terminal device is unable to go in and out of. In this way, among the borders of the offline domain DE, the offline preparations domain EE is not generated around the border where the mobile terminal device is unable to go in and out of.

### [constitution of server and mobile terminal device]

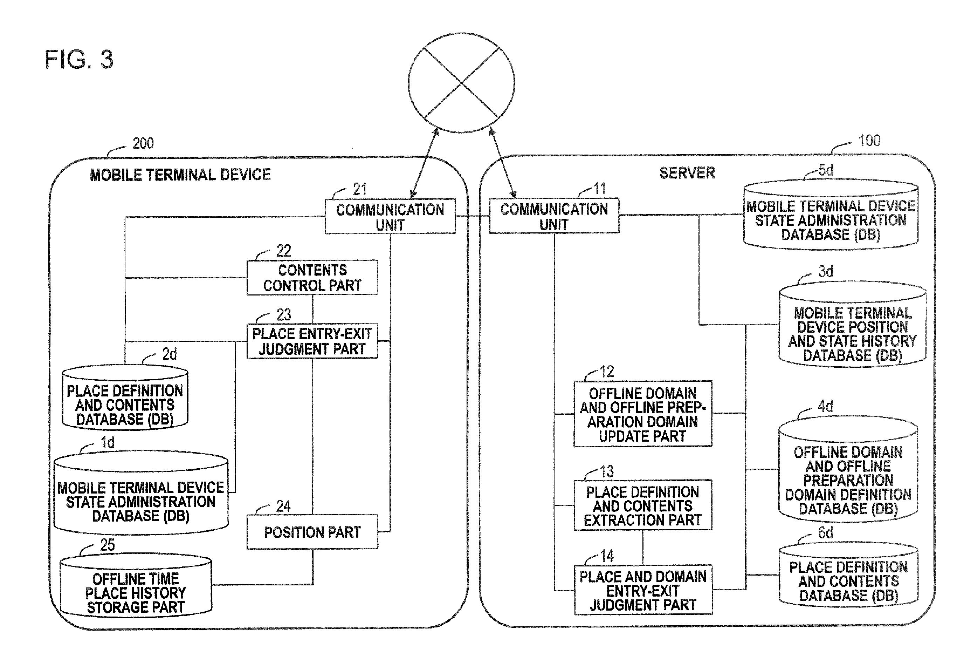

FIG 3 is a diagram indicating an example of the hardware constitution of the server 100 and the mobile terminal device 200 constituting the information provision service system according to the embodiment. At first, the constitution of the mobile terminal device 200 will be explained. The mobile terminal device 200 and the server 100 are connected through communication such as the radio. In addition, in the example, the mobile terminal device such as smart phone is exemplified as an example of the terminal device, but the terminal device is not limited to this example.

### [constitution of the mobile terminal device]

In FIG. 3, the mobile terminal device 200 has, for example, a communication unit 21, a contents control part 22, a place entry-exit judgment part 23, a positioning part 24, and an offline time place history storage part 25. In addition, the mobile terminal device 200 includes a mobile terminal device state administration database 1d (below described as data base (DB)) and a place definition and contents database (DB) 2d. The mobile terminal device 200 includes a processor (CPU), the communication unit and a memory which are not illustrated in FIG. 3, as hardware resources. The memory stores the offline time place history storage part 25, the mobile terminal device state administration database 1d and the place definition and contents database (DB) 2d. The contents control part 22, the place entry-exit judgment part 23, and the positioning part 24 is constituted, for example, by a program. And the processor in the mobile terminal device carries out the program, thereby processing on the terminal side of the information provision service is performed.

The positioning part 24 acquires the information of the current position of the user, using GPS (Global Positioning System) or fixed radio beam strength. The position information is, for example, coordinate information. It is possible that the positioning part 24 acquires the position information, even if a communication state with the server 100 is in an offline state. The communication unit 21 carries out transmission process of the position information, the history of the position information and the entry-exit state to the place to the server 100, and reception process of the contents and the place definition from the server 100.

The place entry-exit judgment part 23 judges the entry-exit to the places A - E based on the position information acquired by the positioning part 24 with reference to the place definition and contents database (DB) 2d. The contents control part 22 provides, for example, contents to the user through a display screen (not illustrated in FIG. 3) and a voice output (not illustrated in FIG. 3) in the mobile terminal device 200. The place definition and contents database (DB) 2d stores a file name of contents and a place definition which are received from the server 100. The place definition is, for example, a coordinate sequence indicating the domain of each place A - E. The offline time place history storage part 25 stores position information which are generated by the positioning part 24 at the offline state, as a history. In addition, the mobile terminal device state administration database (DB) 1d stores the current communication state with the mobile terminal device 200 and the server 100, and the information of located place A - E and domain.

### [constitution of server]

In FIG. 3, the server 100 has a communication unit 11, an offline domain and offline preparation domain update part 12, a place definition and contents extraction part 13, a place and domain entry-exit judgment part 14. In addition, the server 100 has a mobile terminal device state administration database (DB) 5d, a place definition and contents database (DB) 6d, a mobile terminal device position and state history database (DB) 3d, an offline domain and offline preparation domain definition database (DB) 4d. The server 100 includes a processor (CPU), the communication unit and a memory which are not illustrated in FIG. 3, as hardware resources. The memory stores the mobile terminal device state administration database (DB) 5d, the place definition and contents database (DB) 6d, the mobile terminal device position and state history database (DB) 3d, and the offline domain and offline preparation domain definition database (DB) 4d. The offline domain and offline preparation domain update part 12, the place definition and contents extraction part 13, and the place and domain entry-exit judgment part 14 are constituted, for example, by a program. And the processor in the server 100 carries out the program, thereby processing on the server 100 side of the information provision service is performed.

In addition, the mobile terminal device state administration database (DB) 5d and the place definition and contents database (DB) 6d in the server 100 are similar to the mobile terminal device state administration database (DB) 1d and the place definition and contents database (DB) 2d in the mobile terminal device 200. But the gross weight of the information to store in the mobile terminal device state administration database (DB) 5d and the place definition and contents database (DB) 6d in the server 100 are different from the mobile terminal device state administration database (DB) 1d and the place definition and contents database (DB) 2d in the mobile terminal device 200. The mobile terminal device state administration database (DB) 5d and the place definition and contents database (DB) 6d in the server 100 store the information of all mobile terminal device 200 and all place A - F for targets of the service. In contrast, the mobile terminal device state administration database (DB) 1d and the place definition and contents database (DB) 2d in the mobile terminal device store only the information of the mobile terminal device 200 and the information corresponding to the minimum number of place.

In FIG 3, the communication unit 11 in the server 100 carries out reception process of the position information, the history of the position information and the entry-exit state to the place from the mobile terminal device 200 and transmission process of the contents and the place definition to the mobile terminal device 200. The offline domain and offline preparation domain update part 12 detects the offline domain DE and the offline preparation domain EE based on the mobile terminal device position and state history database (DB) 3d and updates the offline domain and offline preparation domain definition database (DB) 4d. In addition, the place definition and contents extraction part 13 extracts a place definition and contents corresponding to the offline preparation domain EE that the mobile terminal device 200 locates, with reference to the offline domain and offline preparation domain definition database (DB) 4d and the place definition and contents database (DB) 6d. In addition, the mobile terminal device state administration database (DB) 5d stores the current communication state with the mobile terminal device 200, the server 100 and the information of located place A - E, and the offline preparation domain EE, for each of all mobile terminal device.

And the place and domain entry-exit judgment part 14 detects the entry-exit to the place A - E and the offline preparations domain EE of the mobile terminal device 200, based on the position information which is received from the mobile terminal device 200, with reference to the mobile terminal device state administration database (DB) 1d. In addition, the place and domain entry-exit judgment part 14, when detecting that the mobile terminal device 200 entered the place A - E, sends the contents of place A - E concerned to the mobile terminal device 200, and sends the delete instruction of the contents that have been sent to the mobile terminal device when detecting that the mobile terminal device 200 left from the place A - E. In addition, the place and domain entry-exit judgment part 14 sends a place definition and contents of the place A - E which overlaps with the offline domain DE corresponding to offline preparation domain EE, to the mobile terminal device 200 when detecting that the mobile terminal device 200 entered the offline preparation domain EE.

Next, an example of the data constitution of the database stored by the server 100 and the mobile terminal device 200 will be described.

### [data constitution]

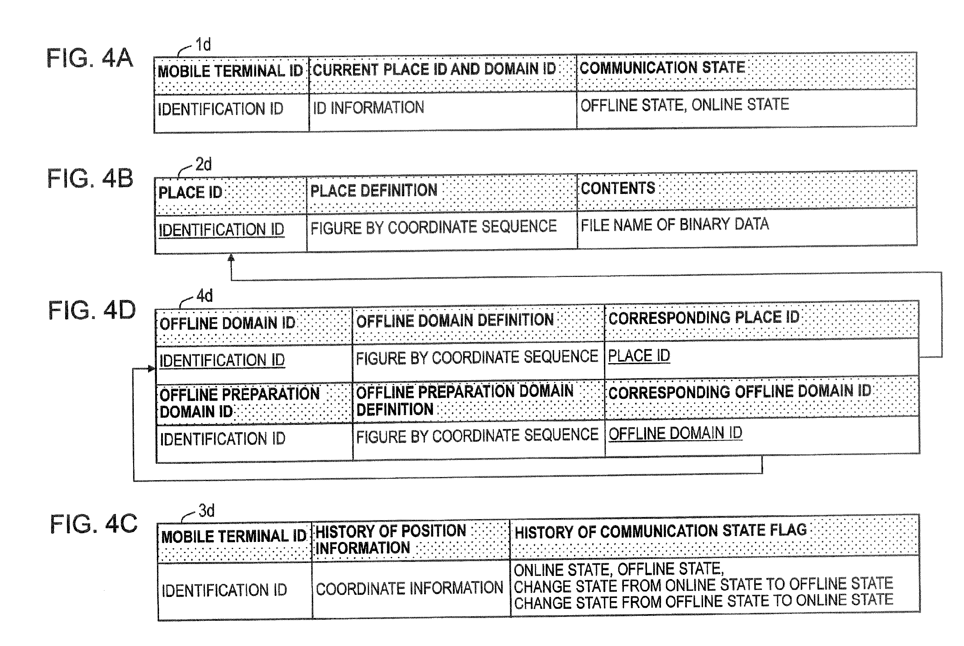

FIG. 4A ∼ 4D are diagrams indicating an example of the data constitution of each database DB which is stored to the server 100 and the mobile terminal device 200. FIG. 4A illustrates the mobile terminal device state administration database (DB) 1d, FIG. 4B illustrates the place definition and contents database (DB) 2d, and FIG. 4C illustrates the mobile terminal device position and state history database (DB) 3d and FIG. 4D illustrates the offline domain and offline preparation domain definition database (DB) 4d.

The mobile terminal device state administration database (DB) 1d has, for example, ID (Identification) of the mobile terminal device 200 which distinguishes a plurality of mobile terminal devices 200, place ID to be located now, the ID of the offline preparation domain, and a current communication state. The communication state indicates, for example, whether it is in an online state, or an offline state. In addition, the place definition and contents database (DB) 2d has a place ID to distinguish a plurality of places A - E, a place definition, the file name of the binary data which are contents. The place definition is, for example, a coordinate sequence constituting a polygon indicating the places A - E. In addition, the mobile terminal device position and state history database (DB) 3d has ID of the mobile terminal device 200, the position information to be provided at a coordinate, a communication state flag. In this example, the communication state flag is four kinds of either next. For example, the communication state flag is in an online state (1), in an offline state (2), a state which has been changed to an offline state from the online state (3), and a state which has been changed to an online state from the offline state (4).

The offline domain and offline preparation domain definition database (DB) 4d has an offline domain ID to distinguish a plural of offline domain DE, the offline domain definition and place ID of the place which overlaps with the offline domain DE, as information of the offline domain DE. In addition, the offline domain and offline preparation domain definition database (DB) 4d has an offline preparations domain ID to distinguish a plurality of offline preparation domain EE, an offline preparations domain definition, ID of the offline domain DE to correspond with, as information of the offline preparation domain EE. The offline domain DE to correspond with is the offline domain DE adjacent to the offline preparation domain EE. In addition, the offline domain definition and the offline preparation domain definition are coordinate sequences forming the polygon indicating the domain, for example.

As illustrated in FIG. 4D, in the offline domain and offline preparation domain definition database (DB) 4d, the offline preparation domain ID and the offline domain ID are connected, and the place ID and corresponding offline domain ID are connected. Thereby, it is possible that the server 100 acquires a place definition and contents file name for downloading, based on the offline preparations domain ID, by referring to the offline domain and offline preparation domain definition database (DB) 4d and the place definition and contents database (DB) 2d.

The processing of information provision service program according to the embodiment will be described based on a flow chart diagram successively. Firstly, process of the mobile terminal device 200 in the information provision service system will be described.

### [processing of mobile terminal side]

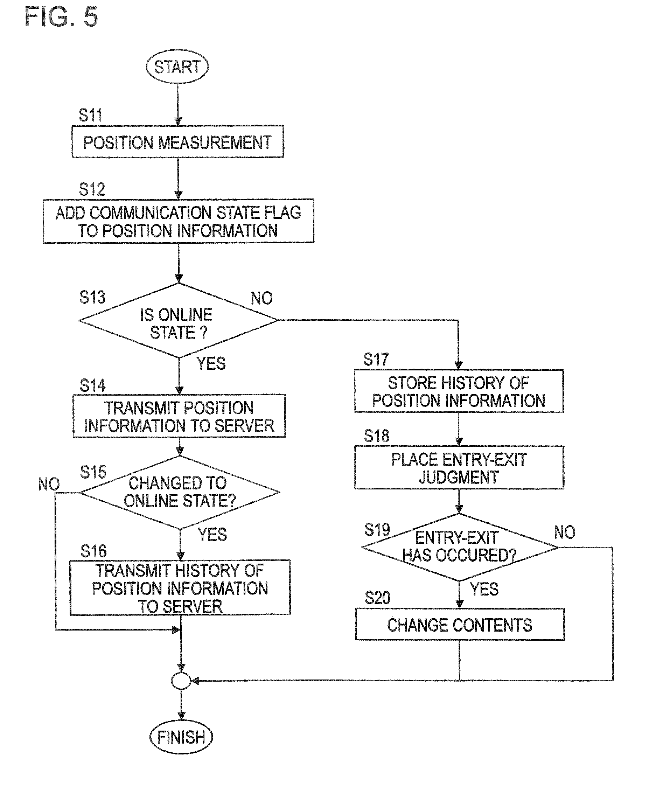

FIG 5 is a flow chart diagram explaining the transmission process of data in the mobile terminal device 200. The positioning part 24 in the mobile terminal device 200 detects the position in a predetermined interval, and generates the position information (S11). For example, the mobile terminal device 200 carries out the process of detection of position every interval such as five seconds. In addition, the mobile terminal device 200 adds a communication state flag to the position information (S12). As described above, in the example, the communication flag is four kinds that are the online state, a state which has changed to the offline state from the online state, the offline state, and a state which has changed to the online state from the offline state. In addition, in this example, position information is added the ID of mobile terminal device 200 more.

When it is in an online state (YES of S13), that is, when a communication state flag indicates either one of a online state and a state changed to the online state from the offline state, the mobile terminal device 200 sends the position information to the server 100 (S14). In this time, when changing from an offline state to an online state (YES/S15), the mobile terminal device 200 sends a history of the position information which is stored in the offline time place history storage part 25 while the mobile terminal device 200 is an offline state, to the server 100 more then (S16).

On the other hand, when it is in an offline state (NO of S13), that is, when the communication state flag indicates either one of a offline state and a state changed to the offline state from the online state, the offline time place history storage part 25 stores the position information which is generated, as a history. Then, the place entry-exit judgment part 23 in the mobile terminal device 200 judges whether the entry-exit to new place A ∼ E occurs, based on the generated position information with reference to the place definition and contents database (DB) 2d (S18). When it is determined that the entry-exit to new place A - E occurred (YES of S19), the contents control part 22 changes the contents to provide, to the contents corresponding to the place located now (S20). In other words, the mobile terminal device 200 switches contents which are provided, to the contents that have been received and correspond to the new place, when detecting the movement to the new place.

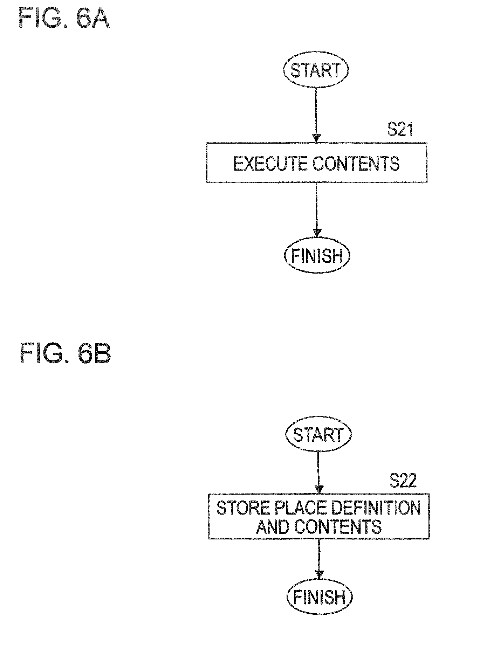

FIG. 6A and FIG. 6B are flow chart diagrams explaining processing at the time of the data reception in mobile terminal device 200. In FIG. 6A, the contents control part 22 carries out the contents, when the communication unit 21 receives the contents depending on current position information from the server 100 (S21). For example, the contents control part 22 carries out the output to the display screen and the output by the sound in the mobile terminal device 200, as execution of contents. In addition, in FIG. 6B, the mobile terminal device 200 updates the place definition and contents database (DB) 2d and stores the contents, when the mobile terminal device 200 receives the place definition and contents corresponding to the offline preparations domain EE from the server 100 (S22). In addition, a place definition and contents corresponding to the offline preparation domain EE are sent by the server 100 when the position information of the mobile terminal device 200 corresponds with the offline preparation domain EE.

Each process of the mobile terminal device 200 explained in the flow charts in FIG 5 and FIG. 6A, FIG. 6B is carried out in parallel. Then the process of server 100 side will be described.

### [processing of server side]

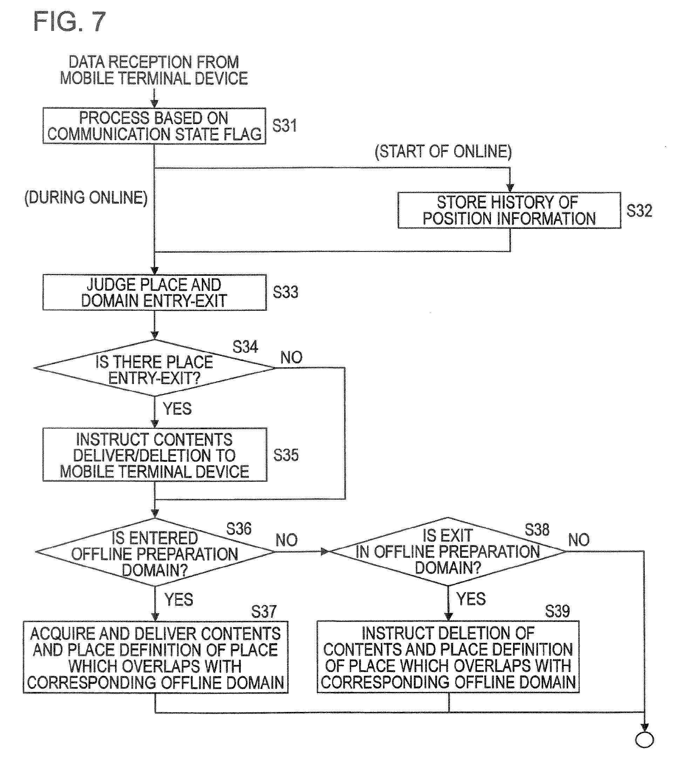

FIG 7 is a flow chart diagram explaining processing at the time of the data reception in the server 100. The server 100 carries out the process in the flow chart diagram as trigger by the data reception from the mobile terminal device 200.

At first, the server 100 judges the communication state flag included in the position information which is received from the mobile terminal device 200 (S31). The server 100, when the communication state flag indicates the change from the offline state to the online state, stores a history of the position information in the offline state that the server 100 received in the mobile terminal device position and state history database (DB) 3d (S32). Then, when the communication state flag indicates an online state successively, the place and domain entry-exit judgment part 14 in the server 100 carries out the entry-exit determination process to the place A - E and the offline preparation domain EE (S33). Especially, the place and domain entry-exit judgment part 14 determines whether target mobile terminal device 200 did the entry-exit in new place A - E and offline preparation domain EE, based on the position information which is received to be concrete with reference to the place definition and contents database (DB) 6d and the offline domain and offline preparation domain definition database (DB) 4d.

When movement to the new place A - E is detected (YES of S34), the server 100 sends the contents corresponding to new place A - E to the mobile terminal device 200 and sends the deletion instruction of the contents of the place the mobile terminal device 200 left (S35). In addition, when it is detected to enter the offline preparation domain EE (YES of S36), the server 100 acquires contents file and the place definition of the place A - E which overlaps with the offline domain DE corresponding to the offline preparation domain EE, with reference to the offline domain and offline preparation domain definition database (DB) 4d and the place definition and contents database (DB) 2d, and sends it to the mobile terminal device 200 (S37). In addition, when it is detected to leave from the offline preparation domain EE (YES of S38), in other words, when it is detected to enter the offline preparations domain EE, but to exit the offline preparations domain EE without entering the offline domain DE (YES of S38), the server 100 sends the deletion instruction of contents file and the place definition of the place A - E, which overlaps with the offline domain DE corresponding to the offline preparation domain EE, and in which the server 100 has been sent in the step S37 (S39).

In this way, when mobile terminal device 200 is located in the offline preparation domain EE, the server 100 sends contents of the place, which overlaps with the offline domain DE corresponding to the offline preparation domain EE, to the mobile terminal device 200. In other words, the server 100 delivers only needed contents to the mobile terminal device 200 in a needed timing. Further, the server 100, when the mobile terminal device 200 is located in the offline preparation domain EE, that is, when it is predicted that the mobile terminal device 200 turns into an offline state soon, delivers the contents of the domain that is in an offline state concerned to the mobile terminal device 200 in advance by the step S37. Thereby, it is possible that the server 100 reduces the capacity of contents stored to the mobile terminal device 200 and reduces the communication fee.

In addition, when a communication state of the mobile terminal device 200 located in the offline preparation domain EE changes in the offline state, it is possible that the server 100 estimates that the mobile terminal device 200 is located in the offline domain DE corresponding to offline preparation domain EE. Thereby, it is possible that the server 100 estimates the position of the mobile terminal device 200 and administrates the mobile terminal device 200, when the mobile terminal device 200 changes in the offline state.

In addition, in this example, the server 100 sends the place definition to the mobile terminal device 200 in addition to the contents file of the place connected with the offline preparation domain EE. However, the server 100 may transmit only contents file to the mobile terminal device 200. In this case, for example, the mobile terminal device 200 stores a definition file of all place A - F beforehand.

Next, the generation process of the offline domain DE and the offline preparation domain EE in the server 100 and a specific example will be explained.

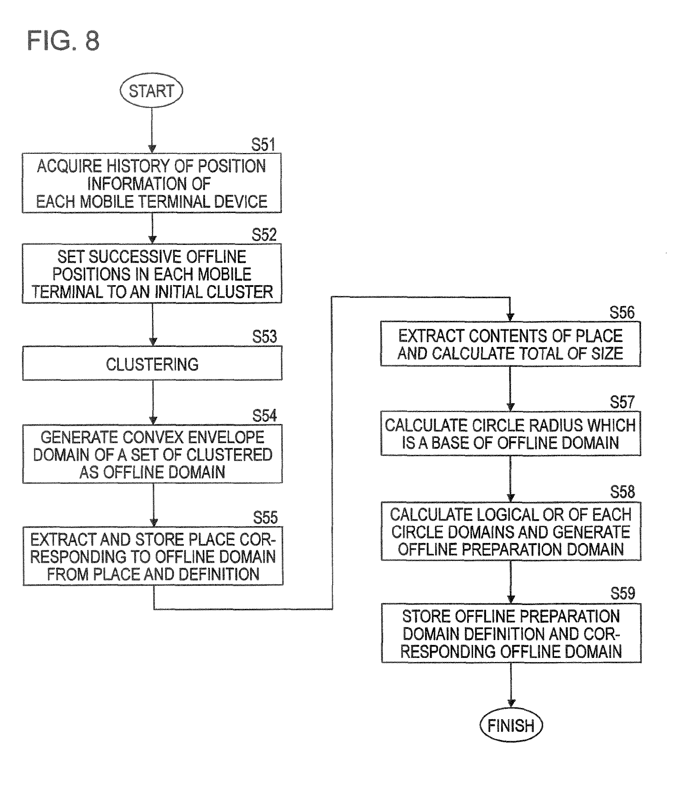

FIG 8 is a flow chart diagram explaining the generation process of the offline domain DE and the offline preparation domain EE in the server 100. For example, the offline domain and the offline preparation domain update part 12 in the server 100 carries out the generation processing of the offline domain DE and the offline preparation domain EE in the following timing. The offline domain and the offline preparation domain update part 12 carries out processing in a predetermined interval, when the data of the fixed quantity is accumulated in the mobile terminal device position and state history database (DB) 3d from the last processing, and when the contents and the place definition are updated. In addition, the offline domain and the offline preparation domain update part 12 carries out the processing, when the number of the mobile terminal device 200, which is in an offline state even though the device is not located in the offline domain DE, reaches a predetermined value, for example. Or, the offline domain and offline preparation domain update part 12 carries out the processing according to the congestion degree in the service provision ranges such as the meeting places. Because the communication state such as the wireless LAN changes according to a congestion degree, the processing is carried out when the congestion degree changes with a fixed quantity in this case.

At first the offline domain and offline preparation domain update part 12 acquires a history of the position information about each mobile terminal device 200 with reference to the mobile terminal device position and state history database (DB) 3d, and acquires the position information in the offline state (S51). And the offline domain and the offline preparation domain update part 12 generates the offline domain DE, based on a set of the position information when the mobile terminal device was in an offline state in succession for each mobile terminal device 200. More especially, the offline domain and offline preparation domain update part 12 sets the position information when the mobile terminal device 200 was in an offline state in succession as an initial cluster (S52). The offline domain and offline preparation domain update part 12 merges the initial clusters in which the distance is near between the mobile terminal devices 200 as the clustering processing (S53).

More specially, the offline domain and offline preparation domain update part 12 continues to merge the near distance cluster until the cluster which is merged does not exist. In this example, for example, when two target clusters include an initial cluster of the mobile terminal device 200 of being common and the domain of the online state is located between the clusters, the merge process of the cluster is not carried out. In this way, the plurality of domains which are in the offline state are merged sequentially, and one or more offline domain DE is generated.

Then, the offline domain and offline preparation domain update part 12 calculates a convex envelop plane figure corresponding to the set of the clustered position information as the offline domain DE (S54). And the offline domain and offline preparation domain update part 12 extracts the place which overlaps with the offline domain DE from the place definition and contents database (DB) 2d, and stores the ID of the place concerned with a coordinate line indicating the offline domain DE in the offline domain and offline preparation domain definition database (DB) 4d (S55). Here, the offline domain and offline preparation domain update part 12 calculates the capacity of the contents of the overlapped place with the offline domain DE (S56). For example, the offline domain and offline preparation domain update part 12 calculates the total of the capacity of the contents corresponding to the plurality of places, when the plurality of place overlap with the offline domain DE.

The offline domain and offline preparation domain update part 12 generates the offline preparation domain EE based on the information of the change position included in the offline domain DE. The change position indicates to a position which changed to the offline state from the online state and a position which returned from the offline state to the online state. In the embodiment, the offline preparation domain EE is formed based on the circle domain around the change position. Therefore, the offline domain and offline preparation domain update part 12 calculates a radius of the circle domain which is a origin of the offline preparation domain EE (S57). More information about the calculation process of radius will be described later based on a specific example.

And the offline domain and offline preparation domain update part 12 calculates the logical sum of the circle domain, and generates the domain which does not overlap with the offline domain DE as the offline preparation domain EE (S58). In addition, the outline of the offline preparations domain EE may be smoothed then. And the offline domain and offline preparation domain update part 12 stores a coordinate sequence indicating the offline preparation domain EE which is generated (S59) in the offline domain and offline preparation domain definition database (DB) 4d with a relation with the ID of the offline domain DE corresponding to the offline preparation domain EE.

The process of the server 100 explained in the flow chart in FIG 7 and FIG, 8 is performed in parallel. Then, the generation process of the offline domain DE and generation process of offline preparation domain EE will be described based on a specific example.

### [specific example of generation processing of offline domain]

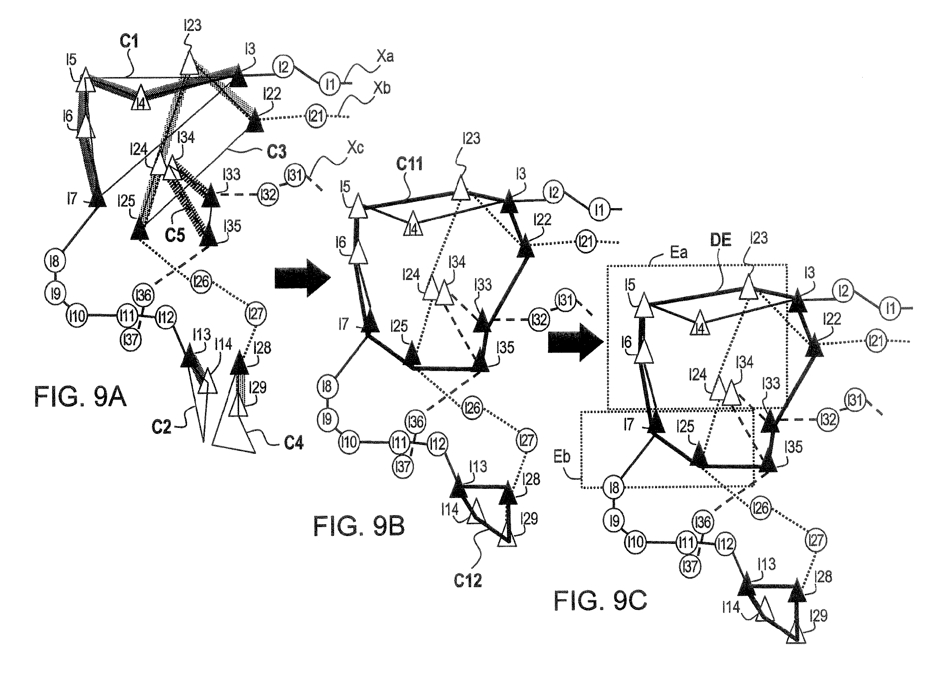

FIG. 9A - FIG. 9C are diagrams explaining a specific example of the generation process of the offline domain DE. In FIG. 9A, FIG. 9B and FIG. 9C, a line "xa" indicates to a trace of the mobile terminal device A based on a history of positions I1 ∼ 137, a dotted line Xb indicates to a trace of the mobile terminal device B based on the history of positions I1 ∼ I37, a dashed line Xc indicates to a trace of the mobile terminal device C based on the history of positions I1 ∼ I37. In addition, a circle and a triangle, which are placed on each trace Xa, Xb, and Xc, indicate to a communication state flag corresponding to the positions I1 - I37 which are measured in a predetermined interval. More especially, a white circle indicates an online state, and white triangle indicates to an offline state. And a black triangle indicates to a change position from the offline state to the online state, or a change position from the online state to the offline state.

In FIG. 9A, the offline domain and offline preparation domain update part 12 generates the initial cluster based on the continuation of online states and the change position, namely the group of the positions which were in the offline state in succession, based on the history of the position of each mobile terminal device A - C. In this example, the position group where is in an offline state of the mobile terminal device A is positions I3 - I7, and I13 - I14. In addition, the position group of the mobile terminal device B is the positions I22 - I25, I28 - I29, the position group of the mobile terminal device C is positions I33 - I35.

Thereby, the initial cluster C1 is generated based on a figure containing the position group I3 - I7 of the mobile terminal device A and the initial cluster C2 is generated based on a figure containing the position group I13 - I14 of the mobile terminal device A. In addition, as similar to this, and the initial clusters C3, C4 of the mobile terminal device B, and the initial cluster C5 of the mobile terminal device C are generated. Then the offline domain and offline preparation domain update part 12 merges the initial clusters of which the distance is close in successively. In this example, the initial clusters C1, C3, C5 are close in distance. In addition, the initial clusters C1, C3, C5 do not sandwich the domain where is in an online state marked by a white circle in the interval. Thereby, as illustrating in FIG. 9B, the initial clusters C1, C3, C5 are merged, and new cluster C11 is generated. Similarly, the clusters C2, C4 are merged and new cluster C12 is generated.

In addition, in this example, the clusters C11, C12 are not merged. Firstly, the clusters C11, C12 include the initial cluster of the same mobile terminal device. More specially, both of the clusters C11, C12 include initial cluster of the mobile terminal device A and the mobile terminal device B. Secondly, the cluster C11 and cluster C12 sandwiches the positions I8 - I12, I26 - 127 and 136 -137 which are in an online state. In other words, because the cluster s C11, C12 contain the domain where is in an offline state based on the history information of the positions of mobile terminal devices A and B and sandwich the domain of the online state, it is judged that the merge is impossible. When the cluster which is merged does not exist, among the sets of the clustered position, the polygon generated by connecting positions in the most outside, namely convex envelope domain (C11, C12) is generated as the offline domain DE.

And ID of the place which overlaps with the generated offline domain DE is registered as the place ID corresponding to the offline domain DE. In FIG. 9C, IDs of the places Ea and Eb which overlap with the offline domain DE corresponding to the cluster C11 are stored as the place ID corresponding to the offline domain DE in the offline domain and offline preparation domain definition database (DB) 4d. Similarly, the information about the cluster C12 is stored in the offline domain and offline preparation domain definition database (DB) 4d.

In this way, the server 100 receives a history of the position information in the offline state from the mobile terminal device 200 and generates the offline domain based on the set of the position information which were in an offline state in succession. The offline domain DE is generated in the mobile terminal device 200 more effectively and more exactly, since the offline domain DE is based on a history of the position information in the really measured offline state. In addition, it is possible that more widespread offline domain DE is formed in the space by being based on a history of the position information of the plurality of mobile terminal device 200.

### [details of offline preparations domain]

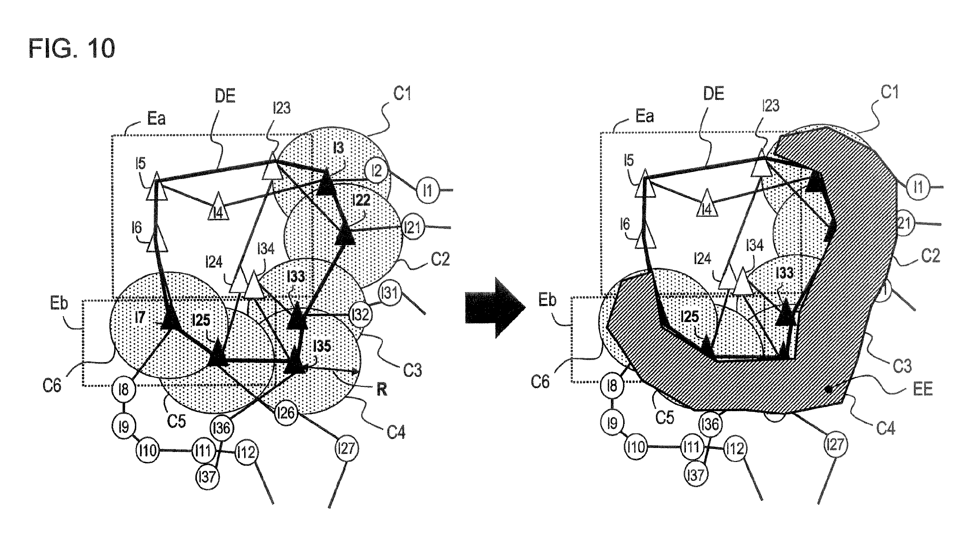

FIG 10 is a diagram explaining a specific example of the generation process of the offline preparation domain EE. The offline domain and offline preparation domain update part 12 generates the offline preparation domain EE based on the change position represented by a black triangle included in the offline domain DE. In the FIG. 10, the change positions are positions I3, I7, I22, I24, I33, I35. And the circle areas C1 - C6 are generated around each change positions I3, I7, I22, I24, I33, I35. In the embodiment, the generation process of offline preparation domain EE sets the radius R of the circle areas C1 - C6 based on the following point of view. The radius R of the circle areas C1 - C6 means width of the offline preparation domain EE.

Firstly, it is needed that the entering of the offline preparation domain EE is detected before the mobile terminal device enters the offline domain DE across the offline preparations domain EE. When it is not detected that the mobile terminal device locates in the offline preparation domain EE though entering the offline preparation domain EE, it is impossible that the server 100 delivers contents in advance. Therefore, firstly, and it is needed that the width of the offline preparations domain EE is bigger than the distance which is calculated based on at least "measurement interval of the position information * movement speed of the user".

Secondly, it is needed that the downloading of the place definition of the offline domain DE and contents corresponding to the offline domain DE completes before coming in the offline domain DE across the offline preparation domain EE. When the downloading of contents is not completed in the offline preparation domain EE, it is not possible that the mobile terminal device 200 provides the contents in a user when the mobile terminal device turns into an offline state. Therefore, secondly, it is needed that the width of the offline preparation domain EE is bigger than the distance which is calculated based on "time required for the transmission of contents (and place definition) corresponding to the offline domain DE * movement speed of the user".

In other words, it is needed that the width of the offline preparation domain EE has enough distance in which it is detected that the mobile terminal device 200 is located in the offline preparations domain EE and the downloading of the place definition and contents completes. Therefore, the width of offline preparations domain EE is calculated based on an expression of "measurement interval * movement speed of the user + (data size of the contents ÷ transmission rate of contents) * movement speed of the user". The movement speed of the user is calculated based on a history of the position information and a measurement interval, for example. The maximum of the movement speed, which is calculated by the movement distance and the measurement interval based on the history of the position information, is calculated as movement speed of the user.

Thereby, it is possible to detect that the mobile terminal device entered the offline preparation domain EE, and to calculate the distance which is able to receive contents after the detection. The offline domain and offline preparation domain update part 12 generates the circle domains C1 - C6 in which the calculated distance is a radius R. And the offline domain and offline preparation domain update part 12 generates the domain which is logical sum of the circle domains C1 - C6 and does not overlap with the offline domain DE as the offline preparation domain EE. In addition, the radius R indicates to the width of the offline preparation domain EE.

And the offline domain and offline preparation domain update part 12 stores the coordinate sequence which indicates to the generated offline preparation domain EE and the ID of corresponding offline domain DE in the offline domain and offline preparation domain definition database (DB) 4d (S59). In an example of FIG. 10, the information of offline preparation domain EE is stored with correspondence to ID of the offline domain DE in the figure. In addition, because the offline domain DE corresponds to the places Ea and Eb, the place definition of the places Ea and Eb and contents are sent to the mobile terminal device 200, when the mobile terminal device 200 enters in the offline preparation domain EE.

It is prevented that the mobile terminal device enters the offline domain DE without being detected that the mobile terminal device 200 entered the offline preparation domain EE, by generating the offline preparation domain EE. Furthermore, it is prevented that the mobile terminal device 200 entered in the offline domain DE across the offline preparation domain EE while the downloading of contents corresponding to the offline domain DE is not completed.

In addition, the movement speed of the user, which is used for the calculation of the radius of the circle domains C1 - C6, may be calculated according to each mobile terminal device 200 corresponding to the user, and may be calculated commonly by all mobile terminal device 200. In this case, for example, the server 100 stores the position information of each mobile terminal device 200 for each ID of the mobile terminal device 200 in the mobile terminal device position and state history database (DB) 3d. Thereby, it is possible to calculate the movement speed for user unit, by calculating movement speed for each mobile terminal device ID. Furthermore, the movement speed may be calculated according to the generation of the user. In this case, for example, the user information is stored corresponding to the mobile terminal device ID. The user information has a user ID and the generation or the date of birth corresponding to the mobile terminal device ID.

In addition, in the embodiment, the offline preparation domain EE is formed around the change position. In other words, the offline domain and offline preparation domain update part 12 in the embodiment does not set the all domain in circumstance of the offline domain DE as the offline preparation domain EE, but sets only the domain around the change position in the offline domain DE as the offline preparation domain EE. Thereby, the offline preparation domain EE is not generated around the border where the user is not able to entry and exit, but is generated around the border where the user is able to entry and exit, among the borders of the offline domain DE. In other words, when the offline domain DE is an indoor room, the offline preparation domain EE is not generated around the wall of the room, but is generated around the doorway of the room. In this way, the useless transmission and reception of contents does not occur, because the offline preparation domain EE is formed according to structure of the space in the appropriate range.

As described above, in the information provision service program according to the embodiment, the information provision service process has a process that the server 100 receives the position information of the mobile terminal device 200 and a process that the server 100 send the contents of the domain corresponding to the position information to the mobile terminal device 200 and a process that the server 100 sends contents of the offline domain DE corresponding to the offline preparation domain EE when the position information corresponds to the offline preparation domain EE which is located in around the offline domain DE that the communication with the mobile terminal device is in an offline state.

In this way, the server 100 generates the offline preparation domain EE which is located around the offline domain DE and delivers contents of the offline domain DE corresponding to the offline preparation domain EE to the mobile terminal device 200 in advance, when the mobile terminal device 200 locates in the offline preparation domain EE. Thereby, it is possible to provide the contents corresponding to the position to the user even when it becomes in an offline state.

In addition, when the mobile terminal device saves all contents, much storage area are needed for mobile terminal device 200. In addition, it is difficult to make the mobile terminal device 200 to be able in communication at neither position on the space. In contrast, according to the information provision service program in the embodiment, the server 100 delivers only necessary contents to mobile terminal device 200 in a necessary timing and further delivers the contents of the domain that is in an offline state to the mobile terminal device 200 in advance, when it is predicted that the mobile terminal device changes in the offline state soon. Thereby, it is possible that the server 100 holds the capacity of contents saved in the mobile terminal device 200 and reduces the communication fee.

In addition, according to the information provision service program in the embodiment, it is predicted that a possibility, in which the mobile terminal device 200 locates in the offline domain DE corresponding to the offline preparation domain EE, is high, when a communication state turns into an offline state after the mobile terminal device 200 entered in the offline preparation domain EE. Therefore, it is possible that the server 100 predicts, about the mobile terminal device 200 which is in an offline state, whether it is in a state running out of battery and whether it is more likely to be located in the offline domain DE. Thereby, even when the mobile terminal device 200 is in an offline state, it is possible that the server 100 predicts a position and a state of the mobile terminal device 200 and administrates the mobile terminal device 200.

In addition, in the embodiment, the information provision service processing further includes a process that the server 100 receives a history of the position information in the offline state from the mobile terminal device and a process that the server 100 generates the offline domain DE based on a set of the position information which were offline states in succession. In this way, it is possible that the server 100 in the embodiment generates the offline domain DE based on the position information measured by the mobile terminal device 200. It is possible that the server 100 generates exact offline domain DE effectively by generating the offline domain DE based on the measured position information.

In addition, in the embodiment, when the server 100 is able to communicate with the plurality of mobile terminal devices 200, the offline domain DE is generated by merging the clusters which is located near and based on the set of the position information. In this way, by being based on the position information of the plurality of mobile terminal devices, it is possible that the server 100 generates the offline domain DE for wider ranges in the space in comparison with the offline domain DE based on the position information of one mobile terminal device 200.

In addition, in the embodiment, the information provision service processing further includes a process that the server 100 generates the offline preparation domain EE around the change position with the offline state and the online state in the offline domain DE. Thereby, it is possible that the server 100 in the embodiment generates the offline preparations domain EE in not all circumstance of the offline domain EE but according to structure of the space. In other words, the server 100 does not generate the offline preparation domain EE around the domain where the mobile terminal device is not able to move, that is, around the wall that the user is not able to entry and exit, but generates the offline preparation domain EE around the domain such as a doorway where the user is able to entry and exit, among the circumstance of the offline domain DE. Thereby, it is possible to prevent the occurrence of the useless reception processing of contents and to reduce the communication cost.

In addition, in the embodiment, the offline preparations domain EE is generated as the domain which is excluded the offline domain DE from a logical sum of the circle domains C1 - C6 of which its center is the change position of the offline domain DE and the radius R is an addition value with the first distance based on an acquisition interval of the position information and the movement speed of the mobile terminal device and the second distance based on transmission time of the contents of the offline domain DE and the movement speed.

Thereby, it is possible that the server 100 detects that the mobile terminal device 200 was in the offline preparations domain EE and generates the offline preparation domain EE which has the distance that the mobile terminal device 200 is able to receive contents after the detection as a width. Therefore, it is prevented that the mobile terminal device 200 enters the offline domain DE without detecting the offline preparation domain EE and that the mobile terminal device enters the offline domain DE while the reception of contents corresponding to the offline domain DE does not complete.

In this way, in the information provision service system in the embodiment, it is possible that the mobile terminal device 200 provides the contents corresponding to the position in a user even when the mobile terminal device 200 becomes in an offline state, by setting an offline preparation domain. Thereby, it is possible to suppress the size of the storage area in the mobile terminal device 200 and to reduce the communication fee, because the server 100 delivers only needed contents to the mobile terminal device 200 in on-time or beforehand.

### REFERENCE SIGNS LIST

100: Server, 11: Communication unit, 12: Offline domain and offline preparation domain update part, 13: Place definition and contents extraction part, : Place and domain entry-exit judgment part,
200: Mobile terminal device, 21: Communication unit, 22: Contents control part, 23: Place entry-exit judgment part, 24: Positioning part, 25: Offline time place history storage part

## Claims

1. A program for causing a computer to execute a process, the process comprising:
receiving, by a server, a position information from a mobile terminal device; and
sending, by the server, contents of domain corresponding to the position information to the mobile terminal device, and
wherein the sending further comprises:
second sending, by the server, when the position information corresponds to an offline preparation domain which locates a circumstance of an offline domain of which a communication with the mobile terminal device is in an offline state, the contents of the offline domain corresponding to the offline preparation domain.

2. The program according to claim 1, the process further comprising:
second receiving, by the server, a history of the position information in the offline state from the mobile terminal device; and
generating, by the server, the offline domain based on a set of position information in which the mobile terminal device successively locates in the offline state.

3. The program according to claim 2, the process further comprising:
second generating, by the server, the offline preparation domain on a circumstance of a change position from the offline state to the online state.

4. The program according to claim 3, the second generating further comprising:
generating the offline preparation domain by excluding the offline domain from a logical sum of a plurality of circle domains which has a center of the change point and has a radius which is addition value with a first distance based on an acquisition interval of the position information and a movement speed of the mobile terminal device and a second distance based on a transmission time of the contents of the offline domain and the movement speed of the mobile terminal device.

5. A method for information provision service, the method comprising:
receiving, by a server, a position information from a mobile terminal device; and
sending, by the server, contents of domain corresponding to the position information to the mobile terminal device, and
wherein the sending further comprises:
second sending, by the server, when the position information corresponds to an offline preparation domain which locates a circumstance of an offline domain of which a communication with the mobile terminal device is in an offline state, the contents of the offline domain corresponding to the offline preparation domain.

6. An information provision service device comprising:
a receiver which receives a position information from a mobile terminal device; and
a transmitter which transmits contents of domain corresponding to the position information to the mobile terminal device, and
wherein the transmitter is configured to further send, when the position information corresponds to an offline preparation domain which locates a circumstance of an offline domain of which a communication with the mobile terminal device is in an offline state, the contents of the offline domain corresponding to the offline preparation domain.

7. An information provision service system comprising:
a mobile terminal device configured to send a position information to a server; and
the server configured to receive the position information, send contents of domain corresponding to the position information to the mobile terminal device, and further send, when the position information corresponds to an offline preparation domain which locates a circumstance of an offline domain of which a communication with the mobile terminal device is in an offline state, the contents of the offline domain corresponding to the offline preparation domain, and
wherein the mobile terminal device is configured to receive the contents and output the contents corresponding to the position information.
